# FASCICULE DE BREVET EUROPEEN

(11) **EP 0 724 106 B1**
(45) Date de publication et mention de la délivrance du brevet: **17.05.2000**
(21) Numéro de dépôt: 96400144.0
(22) Date de dépôt: 22.01.1996
(51) Int. Cl.: F16L 33/02

(54) **Collier de serrage**
Rohrschelle
Pipe clamp

(30) Priorité: 25.01.1995 FR 9500823
(43) Date de publication de la demande: 31.07.1996
(73) Titulaire: Etablissements CAILLAU, 92130 Issy-les-Moulineaux (FR)
(72) Inventeur: Detable, Pascal, F-41130 Gievres, Villedieu (FR); Andre, Michel, F-41200 Romorantin (FR); Viratelle, Henri, F-89250 Mont Saint Sulpice (FR)
(74) Mandataire: Hasenrader, Hubert

(56) Documents cités:
- EP-A- 0 236 217
- EP-A- 0 491 610
- EP-A- 0 545 629
- US-A- 4 987 652

## Description

On connaît, notamment par le brevet français publié sous le numéro 2 470 275, au nom de la demanderesse, la possibilité de munir un collier de serrage d'une ondulation formant réserve d'élasticité.

La demande de brevet français, déposée par la demanderesse sous le numéro 93 06 046 le 19 mai 1993 (FR-A-2 705 410), propose une amélioration d'un collier de ce type.

Elle divulgue en effet un collier de serrage constitué par une première portion de bande de métal enroulée sur elle-même, dite "portion intérieure", présentant, au voisinage de l'une de ses extrémités, un double pli radial, dénommé "oreille", et par une deuxième portion de bande, dite "portion extérieure", qui est fixée, à sa première extrémité, sur la face externe de la portion intérieure, présente une ondulation formant réserve d'élasticité, est munie, à sa deuxième extrémité, d'un crochet susceptible d'être agrafé derrière l'oreille au cours du serrage du collier, et comporte une partie dite "intermédiaire", située entre l'ondulation et le crochet, et s'étendant sensiblement selon la périphérie de la portion intérieure, cette dernière présentant, au voisinage de l'autre de ses extrémités, une zone recouverte par ladite partie intermédiaire.

On sait que la réserve d'élasticité permet de maintenir un serrage suffisant, même lorsque les dimensions de l'objet à serrer se trouvent modifiées, en particulier sous l'effet des variations de température.

Par ailleurs, les perfectionnements apportés par la demande de brevet n° 93 06 046 visent, lorsque la portion de bande intérieure est enroulée sur elle-même sur plus de 360°, c'est-à-dire que ses deux extrémités se chevauchent, à éviter toute discontinuité de l'appui du collier sur l'objet à serrer.

Toutefois, dans certains cas difficiles, les qualités des colliers décrits par les documents précités risquent d'être perdues au moment de leur mise en place ou de leur serrage.

Plus précisément, il peut arriver que, lors de l'agrafage du crochet sur l'oreille, l'opérateur provoque par inadvertance un serrage provisoirement trop important du collier, ce qui risque d'occasionner localement un dépassement de la limite d'élasticité du métal.

Il se trouve cependant qu'il est important que le collier conserve son élasticité de manière à pouvoir continuer de garantir le serrage de l'objet à serrer, même si les dimensions de ce dernier se trouvent légèrement modifiées après la mise en place du collier.

La demande de brevet déposée par la demanderesse sous le numéro 93 06 045 le 19 mai 1993, propose de pourvoir l'oreille d'un organe de butée susceptible de venir en contact de butée avec la face interne du crochet lorsque celui-ci est en cours d'agrafage sur l'oreille.

Cette solution s'avère globalement satisfaisante pour éviter de dépasser la limite d'élasticité sur le pourtour du collier et, plus particulièrement, dans la région du crochet.

Toutefois, les exigences imposées par les constructeurs sont telles qu'il est essentiel de s'assurer, même dans les cas les plus difficiles, de l'efficacité totale de la réserve d'élasticité en évitant, précisément dans cette région, tout dépassement de la limite d'élasticité.

La présente invention vise à résoudre ce problème technique et à améliorer encore les colliers précités.

Dans ce but, le collier comporte un premier et un second moyens de butée, ménagés respectivement sur la partie intermédiaire de la portion extérieure et sur la zone recouverte de la portion intérieure, et susceptibles de coopérer entre eux pour déterminer une limite d'utilisation de la réserve d'élasticité.

La réserve d'élasticité est utilisable, tant dans le sens de son expansion que dans celui de son rétrécissement, tout au long de la vie du collier. Toutefois, dès que les premier et second moyens de butée entrent en contact, l'expansion est arrêtée.

Bien entendu, les moyens de butée sont réalisés de telle sorte qu'ils entrent en contact avant que l'expansion n'atteigne le seuil de dépassement de la limite d'élasticité. En d'autres termes, la limite d'utilisation de la réserve d'élasticité se situe en dessous du seuil de dépassement de la limite d'élasticité.

Cette disposition très simple permet de garantir l'efficacité totale de la réserve d'élasticité.

Le fait que les premier et second moyens de butée soient ménagés sur deux portions de bande différentes (la portion extérieure et la portion intérieure) est une condition de leur efficacité. En effet, lorsque ces moyens coopèrent en butée, la position du crochet se trouve calée par rapport à la deuxième extrémité de la portion de bande intérieure. De ce fait, le collier se comporte alors comme s'il ne comprenait qu'une seule bande et l'on peut le serrer en réduisant seulement le diamètre de cette seule bande, ce qui revient à agir principalement sur la portion de bande intérieure.

Juste après le serrage, la réserve d'élasticité revient de manière à diminuer le diamètre du collier, dans le sens de l'arrêt de la coopération des moyens de butée. Par la suite, elle évolue, soit dans le sens de l'expansion, soit dans le sens de la diminution du diamètre, en fonction des fluctuations du diamètre de l'objet à serrer par exemple due aux variations de température.

Il faut noter que les moyens de butée ne pourraient remplir leur fonction consistant à limiter la course de la réserve d'élasticité si le deuxième moyen de butée se trouvait sur un prolongement de la première extrémité de la portion de bande intérieure s'étendant au-delà de l'oreille (et non pas, comme dans l'invention, au voisinage de la deuxième extrémité de cette portion de bande).

En effet, si tel était le cas, l'entrée en coopération des moyens de butée figerait les dimensions de la partie de la portion de bande extérieure qui se trouve entre le premier moyen de butée et le crochet et, en fait, cette coopération figerait la position du crochet par rapport à l'oreille. Dans cette situation, si le diamètre de l'objet à serrer était suffisamment petit, la réserve d'élasticité ne serait pas sollicitée et l'on pourrait accrocher le crochet sur l'oreille à la condition que la distance entre l'oreille et le deuxième moyen de butée soit inférieure à la distance entre l'extrémité du crochet et le premier moyen de butée.

Si, en revanche, le diamètre de l'objet à serrer était relativement grand, la réserve d'élasticité serait inévitablement sollicitée sans limite jusqu'à ce que le diamètre de serrage soit atteint, ce qui permettrait, alors d'accrocher le crochet sur l'oreille.

Une telle disposition du premier moyen de butée, ne permettrait donc aucunement de définir une limite d'utilisation de la réserve d'élasticité.

Les premier et second moyens de butée peuvent être prévus seuls ou en même temps que l'organe de butée qui fait l'objet de la demande de brevet n° 93 06 045.

L'invention sera bien comprise et ses avantages apparaîtront mieux à la lecture de la description détaillée qui suit, d'un mode de réalisation représenté à titre d'exemple non limitatif. La description se réfère aux dessins annexés sur lesquels :
- la figure 1 montre en coupe un collier de serrage conforme à l'invention avant l'agrafage du crochet sur l'oreille et dans une situation dans laquelle la réserve d'élasticité n'est pas utilisée,
- la figure 2a est une vue partielle selon la flèche F de la figure 1,
- la figure 2b est une vue analogue à celle de la figure 2a, montrant une variante de réalisation des moyens de butée,
- la figure 3 montre partiellement le collier de la figure 1 au cours de l'agrafage du crochet sur l'oreille, dans une situation dans laquelle la limite d'utilisation de la réserve d'élasticité est atteinte,
- la figure 4 est une vue partielle, montrant en coupe une variante de réalisation du collier,
- la figure 5 représente, en vue de dessus, les deux extrémités de la portion de bande intérieure du collier de la figure 4.

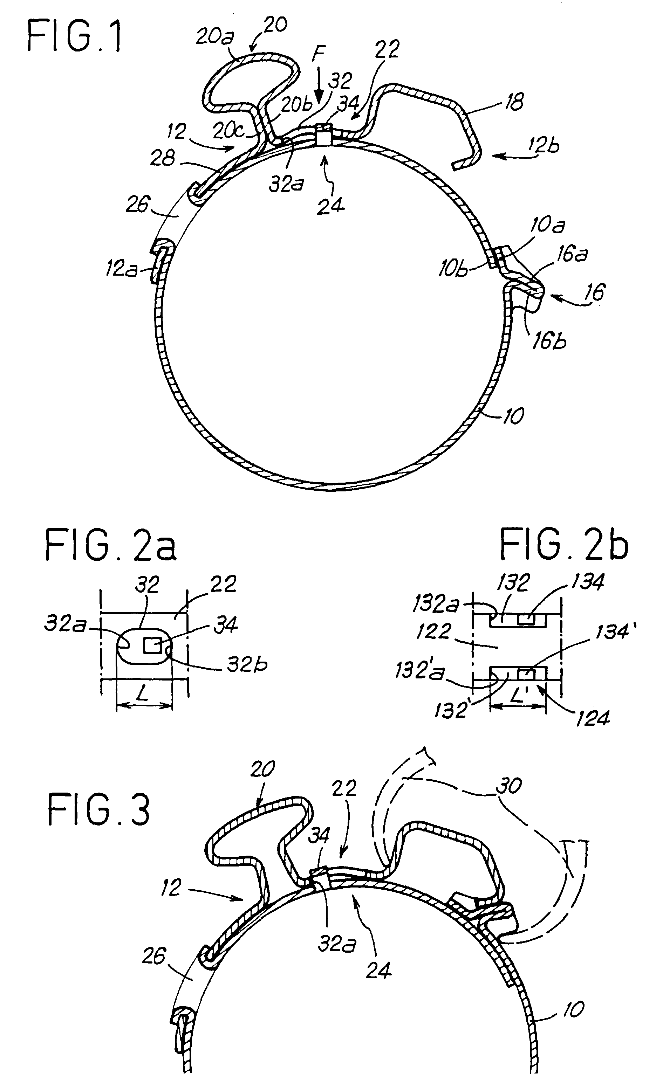

Le collier représenté sur les figures 1 et 3 est constitué par une portion de bande intérieure 10 enroulée sur elle-même et par une portion de bande extérieure 12 fixée, à sa première extrémité 12a, sur la face externe de la portion intérieure 10. Celle-ci présente, au voisinage de son extrémité 10a, une oreille 16 constituée par deux plis 16a et 16b faisant saillie radialement sur sa périphérie extérieure. Cette portion intérieure 10 est enroulée sur elle-même sur plus de 360°, de telle sorte qu'à l'état non serré du collier, son autre extrémité 10b s'étend sous l'extrémité 10a, voire sous l'oreille 16.

La deuxième extrémité 12b de la portion de bande extérieure 12 est munie d'un crochet 18 susceptible d'être agrafé sur l'oreille 16 au cours du serrage du collier. Dans le sens allant de sa première extrémité 12a au crochet 18, cette portion 12 présente successivement une ondulation 20 formant réserve d'élasticité et une partie intermédiaire 22 qui s'étend sensiblement selon la périphérie de la portion intérieure 10. Cette dernière présente donc une zone 24 recouverte par la partie intermédiaire 22. Cette zone 24 est située du côté de la deuxième extrémité 10b de la portion intérieure 10. Plus précisément, cette zone 24 est située entre la zone de la portion intérieure 10 à laquelle est fixée la première extrémité 12a de la portion extérieure 12 et la deuxième extrémité 10b de la portion intérieure.

Dans l'exemple représenté, la fixation de la portion de bande extérieure 12 sur la portion de bande intérieure 10 est réalisée par rivetage, c'est-à-dire par matage, sur la portion extérieure 12, des bords d'un embouti cylindrique 26 pratiqué dans la portion de bande intérieure 10. Ce mode de fixation permet d'éviter de créer sur la périphérie interne de la portion 10 des reliefs risquant d'endommager l'objet serré par le collier.

Dans ce même exemple, l'ondulation 20 n'est pas immédiatement voisine de la zone de fixation des deux portions de bande formant le collier, mais en est séparée par une partie 28 de la portion extérieure 12 qui s'étend selon la périphérie de la portion intérieure 10.

Un premier et un second moyens de butée sont respectivement ménagés sur la partie intermédiaire 22 de la portion extérieure et sur la zone recouverte 24 de la portion intérieure.

Sur les figures 1, 2a et 3, la partie intermédiaire 22 présente une fenêtre 32, tandis que la zone recouverte 24 est pourvue d'une saillie radiale 34 qui s'étend, vers l'extérieur, dans la fenêtre 32.

Le premier moyen de butée est alors constitué par le bord 32a de la fenêtre 32 le plus proche de l'ondulation 20. La saillie radiale 34 constitue, quant à elle, le deuxième moyen de butée.

La fenêtre 32 présente une dimension L dans le sens de la longueur de la portion extérieure 12. En fonction des déformations de la réserve d'élasticité, la saillie radiale 34 se déplace à l'intérieur de cette fenêtre entre le bord de butée 32a et, tout au plus, le bord opposé 32b. La longueur de la fenêtre conditionne donc la plage d'utilisation possible de la réserve d'élasticité.

Dans la variante de la figure 2b, la portion intermédiaire 122 présente deux encoches latérales 132 et 132', alignées transversalement. La zone recouverte 124 est, quant à elle, équipée de deux saillies radiales 134 et 134', alignées transversalement et s'engageant dans les encoches 132 et 132'.

Le premier moyen de butée est alors constitué par les bords 132a et 132'a des encoches les plus proches de l'ondulation, tandis que le deuxième moyen de butée est constitué par les saillies radiales 134 et 134'.

En fonction des déformations de l'ondulation, les saillies se déplacent à l'intérieur des encoches, dont la longueur L' conditionne la plage d'utilisation de la réserve d'élasticité.

On peut également ne prévoir qu'une seule encoche latérale et une seule saillie radiale s'engageant dans cette dernière.

Les saillies radiales 34, 134 ou 134' sont constituées par un ergot estampé, crevé ou analogue, pratiqué dans la zone recouverte 24 ou 124 de la portion intérieure.

La figure 3 montre le collier de la figure 1 au cours de son agrafage à l'aide d'un outil tel qu'une pince, partiellement représenté en traits interrompus. A cette occasion, on peut en effet être amené à utiliser la réserve d'élasticité comme le montre la figure 3, sur laquelle l'ondulation 20 est représentée en position d'expansion maximum. Cette position, qui correspond à la limite d'utilisation de la réserve d'élasticité, est déterminée par la coopération du premier et du second moyens de butée.

On remarque sur les figures 1 et 3 que la partie intermédiaire 22 présente une légère déformation radiale vers l'extérieur. Le bord de butée 32a est pratiqué dans une partie de cette déformation qui se trouve radialement proche de la périphérie de la portion de bande intérieure 10. La déformation permet en fait, même lorsque la réserve d'élasticité est utilisée, de maintenir le bord de butée 32a à proximité de la portion de bande intérieure 10, de façon à éviter que la saillie radiale 34 ne lui échappe.

Une déformation analogue peut être prévue dans la variante illustrée par la figure 2b.

L'ondulation 20 est réalisée sous la forme d'une boucle 20a, pincée de telle sorte qu'elle présente deux pattes 20b et 20c qui, à l'état rétracté de la réserve d'élasticité, sont sensiblement dirigées radialement et adjacentes entre elles.

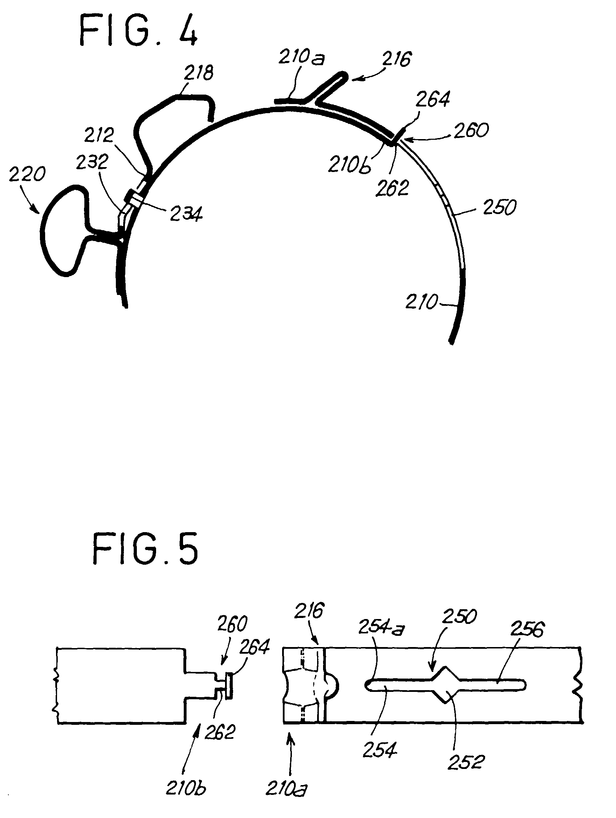

Sur les figures 4 et 5, les éléments analogues à ceux de la figure 1 sont affectés des mêmes références, augmentées de 200.

Dans la variante représentée sur ces figures, on met à profit le fait que l'extrémité 210b de la portion de bande intérieure 210 s'étend sous l'extrémité 210a de cette portion de bande à l'état non serré du collier, pour relier ces deux extrémités l'une à l'autre.

A cet effet, l'extrémité 210a pourvue de l'oreille 216 présente une fente longitudinale 250 située en deçà de cette oreille, c'est-à-dire après cette dernière dans le sens allant de l'extrémité 210a à l'extrémité 210b. L'extrémité 210b, quant à elle, est pourvue d'un pli radial 260.

Le pli radial 260 est raccordé à la portion de bande 210 par un tronçon mince 262 dont la largeur, inférieure à celle de la fente 250, permet son introduction dans cette fente. Le tronçon mince s'étend principalement radialement mais peut également, comme le montre la figure 5, présenter une partie située dans la plan de la bande. L'extrémité libre 264 du pli radial 260 est plus large que le tronçon mince 262.

Dans l'exemple représenté, le pli radial 260 et la fente 250 sont alignés. La fente comporte une lumière 252 de dimension transversale au moins égale à celle de l'extrémité libre 264 du pli radial 260 et une partie courante, constituée par deux tronçons 254 et 256, de dimension transversale inférieure à celle de cette extrémité libre 264.

Le pli radial 260 peut donc être inséré dans la fente 250 par la lumière 252 mais, lorsqu'il se trouve dans la partie courante de la fente, son extrémité libre élargie l'empêche de ressortir. Sous l'effet de l'élasticité de la portion de bande, le pli radial 260 se trouve naturellement, à l'état non serré du collier, au voisinage de l'extrémité 254a du tronçon 254 la plus proche de l'oreille 216, position dans laquelle il ne peut pas ressortir de la fente.

Le pli radial peut avoir la forme d'un T ou d'un L renversé.

## Revendications

1. Collier de serrage constitué par une première portion (10) de bande de métal enroulée sur elle-même, dite "portion intérieure", présentant, au voisinage de l'une (10a) de ses extrémités, un double pli radial (16), dénommé "oreille", et par une deuxième portion de bande (12), dite "portion extérieure", qui est fixée, à sa première extrémité (12a), sur la face externe de la portion intérieure (10), présente une ondulation (20) formant réserve d'élasticité, est munie, à sa deuxième extrémité (12b), d'un crochet (18) susceptible d'être agrafé derrière l'oreille (16) au cours du serrage du collier, et comporte une partie (22) dite "intermédiaire", située entre l'ondulation (20) et le crochet (18), et s'étendant sensiblement selon la périphérie de la portion intérieure (10), cette dernière présentant, au voisinage de l'autre (10b) de ses extrémités, une zone (24) recouverte par ladite partie intermédiaire (22),
caractérisé en ce qu'il comporte un premier (32a) et un second (34) moyens de butée, ménagés respectivement sur la partie intermédiaire (22) de la portion extérieure (12) et sur la zone recouverte (24) de la portion intérieure (10), et susceptibles de coopérer entre eux pour déterminer une limite d'utilisation de la réserve d'élasticité.

2. Collier selon la revendication 1, caractérisé en ce que la partie intermédiaire (22) de la portion extérieure (12) présente une fenêtre (32), cependant que la zone recouverte (24) de la portion intérieure (10) est pourvue d'une saillie radiale (34) s'étendant, vers l'extérieur, dans ladite fenêtre et susceptible de coopérer en butée avec le bord (32a) de cette dernière le plus proche de l'ondulation.

3. Collier selon la revendication 2, caractérisé en ce que la partie intermédiaire (122) de la portion extérieure présente au moins une encoche latérale (132, 132'), cependant que la zone recouverte (124) de la portion intérieure est pourvue d'au moins une saillie radiale (134, 134') s'étendant, vers l'extérieur, dans ladite encoche et susceptible de coopérer en butée avec le bord (132a, 132'a) de cette dernière le plus proche de l'ondulation.

4. Collier selon l'une quelconque des revendications 2 et 3, caractérisé en ce que la saillie radiale (34 ; 134, 134') est constituée par un ergot estampé dans la zone recouverte (24 ; 124) de la portion intérieure (10).

5. Collier selon l'une quelconque des revendications 1 à 4, caractérisé en ce que l'extrémité (210a) de la portion de bande intérieure (210) pourvue de l'oreille (216) présente une fente longitudinale (250) située en deçà de cette oreille, cependant que l'autre extrémité (210b) de ladite portion intérieure est pourvue d'un pli radial (260), dirigé vers l'extérieur et comprenant un tronçon mince (262) de largeur inférieure à la celle de la fente (250) et une extrémité libre (264) de largeur supérieure à celle dudit tronçon mince.

## Patentansprüche

1. Klemmschelle, gebildet durch einen ersten Abschnitt (10) eines aufgerollten Metallbandes, genannt "innerer Abschnitt", der nahe einem (10a) seiner Enden eine radiale Doppelfaltung (16), genannt "Ansatz", aufweist und durch einen zweiten Bandabschnitt (12), genannt "äußerer Abschnitt", der an seinem ersten Ende (12a) auf der äußeren Fläche des inneren Abschnitts (10) befestigt ist, eine Wellung (20) aufweist, die eine Elastizitätsreserve bildet, an seinem zweiten Ende (12b) mit einem Haken (18) versehen ist, der beim Zusammenziehen der Schelle hinter dem Ansatz (16) einhaken kann, und einen Teil (22), genannt "Zwischenteil", aufweist, der zwischen der Wellung (20) und dem Haken (18) vorgesehen ist und sich im Wesentlichen gemäß dem Umfang des inneren Abschnitts (10) erstreckt, wobei letzterer nahe dem anderen (lOb) seiner Enden einen durch diesen Zwischenteil (22) bedeckten Bereich (24) aufweist,
dadurch gekennzeichnet, dass sie ein erstes (32a) und ein zweites (34) Anschlagmittel aufweist, die am Zwischenteil (22) des äußeren Abschnitts (12) bzw. am bedeckten Bereich (24) des inneren Abschnitts (10) vorgesehen sind und zusammenarbeiten können, um eine Grenze für die Nutzung der Elastizitätsreserve zu bestimmen.

2. Schelle nach Anspruch 1, dadurch gekennzeichnet, dass der Zwischenteil (22) des äußeren Abschnitts (12) ein Fenster (32) aufweist, während der bedeckte Bereich (24) des inneren Abschnitts (10) mit einem radialen Vorsprung (34) versehen ist, der sich nach außen in dieses Fenster erstreckt und mit dem der Wellung am nächsten liegenden Rand (32a) dieses Fensters als Anschlag zusammenarbeiten kann.

3. Schelle nach Anspruch 2, dadurch gekennzeichnet, dass der Zwischenteil (122) des äußeren Abschnitts zumindest eine seitliche Aussparung (132, 132') aufweist, während der bedeckte Bereich (124) des inneren Abschnitts mit zumindest einem radialen Vorsprung (134, 134') versehen ist, der sich nach außen in diese Aussparung erstreckt und mit dem der Wellung am nächsten liegenden Rand (132a, 132'a) der letzteren als Anschlag zusammenarbeiten kann.

4. Schelle nach einem der Ansprüche 2 und 3, dadurch gekennzeichnet, dass der radiale Vorsprung (34; 134, 134') durch einen im bedeckten Bereich (24; 124) des inneren Abschnitts (10) geprägten Vorsprung gebildet ist.

5. Schelle nach einem der Ansprüche 1 bis 4, dadurch gekennzeichnet, dass das mit dem Ansatz (216) versehene Ende (210a) des inneren Bandabschnitts (210) einen länglichen Spalt (250) aufweist, der diesseits dieses Ansatzes vorgesehen ist, während das andere Ende (210b) dieses inneren Abschnitts mit einer radialen Falte (260) versehen ist, die nach außen zeigt und einen dünnen Teilabschnitt (262) mit einer Breite, die geringer ist als jene des Spaltes (250), und ein freies Ende (264) mit einer Breite aufweist, die größer ist als jene des dünnen Teilabschnitts.

## Claims

1. Clamping collar constituted by a rolled-up first metal strip portion (10) referred to as an "inner portion" and having two radial folds (16) in the vicinity of one of its ends (10a) referred to as a "lug", and by a second strip portion (12) referred to as an "outer portion", which is fixed at its first end (12a) on the outside face of the inner portion (10), which has an undulation (20) forming a reserve of resilience, which is provided at its second end (12b) with a hook (18) suitable for engaging behind the lug (16) while the collar is being clamped, and which includes an "intermediate" part (22) situated between the undulation (20) and the hook (18) and extending substantially along the periphery of the inner portion (10) which has, in the vicinity of the other one of its ends (10b), a covered zone (24) covered by said intermediate part (22),
the collar being characterized in that it includes first and second abutment means (32a, 34) formed respectively on the intermediate part (22) of the outer portion (12) and on the covered zone (24) of the inner portion (10) and suitable for co-operating with each other to set a limit on the use of the reserve of resilience.

2. Collar according to claim 1, characterized in that the intermediate part (22) of the outer portion (12) has a window (32) while the covered zone (24) of the inner portion (10) is provided with an outwardly extending radial projection (34) engaged in said window and suitable for co-operating in abutment with the closer end (32a) of said window to the undulation.

3. Collar according to claim 2, characterized in that the intermediate part (122) of the outer portion has at least one lateral notch (132, 132') while the covered zone (124) of the inner portion is provided with at least one outwardly extending radial projection (134, 134') engaged in said notch and suitable for co-operating in abutment with the closer end (132a, 132'a) of said notch to the undulation.

4. Collar according to any one of claims 2 and 3, characterized in that the radial projection (34; 134, 134') is constituted by a tab stamped out from the covered zone (24; 124) of the inner portion (10).

5. Collar according to any one of claims 1 to 4, characterized in that the end (210a) of the inner strip portion (210) provided with the lug (216) has a longitudinal slot (250) situated this side of said lug, while the other end (210b) of said inner portion is provided with an outwardly directed radial tip (260) having a thin length (262) of width smaller than the width of the slot (250) and a free end (264) of width greater than that of said thin length.
